# EUROPEAN PATENT APPLICATION

(11) **EP 4 292 868 A1**
(43) Date of publication of application: **20.12.2023**
(21) Application number: 22752971.6
(22) Date of filing: 09.02.2022
(51) Int. Cl.: B60L 53/60, B60L 58/12, B60L 53/24, B60L 53/31

(54) **ELECTRIC VEHICLE CHARGING CONTROLLER**

(30) Priority: 09.02.2021 KR 20210018258
(71) Applicant: LG Innotek Co., Ltd., Seoul 07796 (KR)
(72) Inventor: LIM, Myoung Keun, Seoul 07796 (KR)
(74) Representative: DREISS Patentanwälte PartG mbB
(86) International application number: PCT/KR2022/001958
(87) International publication number: WO 2022/173211

(57) **Abstract**

An electric vehicle charging controller according to an embodiment of the present invention comprises: a first control unit for executing a charging sequence that charges a battery arranged in a vehicle on the basis of a charging sequence signal received from an electric vehicle power supply device; a second control unit for generating a first control signal that wakes up the first control unit on the basis of the charging sequence signal; a first switch unit, which is controlled by the first control unit and transmits the charging sequence signal to the first control unit or blocks the transmission; and a second switch unit, which is controlled by the second control unit and transmits the charging sequence signal to the second control unit or blocks the transmission.

## Description

### [Technical Field]

The present invention relates to an electric vehicle charging controller.

### [Background Art]

Eco-friendly vehicles, such as electric vehicles (EVs) or plug-in hybrid electric vehicles (PHEVs), use electric vehicle supply equipment (EVSE) installed at charging stations for charging batteries.

To this end, an electric vehicle charging controller (EVCC) is mounted in the EV, communicate with the EV and EVSE, and control charging of the EV.

For example, when the EVCC receives a signal to instruct charging start from the EV, the EVCC may perform control so that charging starts, and when the EVCC receives a signal to instruct charging stop from the EV, the EVCC may perform control so that the charging stops.

A method of charging the EV may be classified into a fast charging method and a slow charging method according to a charging time. In the case of the fast charging method, a battery is charged by a direct current (DC) current supplied by a charger, and in the case of the slow charging method, a battery is charged by an alternating current (AC) current supplied to a charger. Accordingly, the charger used for the fast charging method is called a fast charger or a DC charger, and the charger used for the slow charging method is called a slow charger or an AC charger.

Since an electric vehicle charging system charges using high-voltage electricity, a safety issue such as electric shock or a system failure problem due to a reverse current or the like may occur. Accordingly, in order to prevent various problems that may occur during charging and the like, the electric vehicle charging system controls a charging process through various sequences, and various structures to improve stability of the system are provided in the electric vehicle charging system.

However, since the EV, which should normally check a charging sequence, continuously discharges a battery during checking, such a process becomes a factor of decreasing a lifetime of the battery, and thus a solution to address such a problem is required.

### [Disclosure]

### [Technical Problem]

Accordingly, the present invention is directed to providing an electric vehicle charging controller capable of reducing power consumption.

The objectives to be solved from the present invention is not limited thereto and include objectives or effects which may be understood from the technical solutions or embodiments of the objectives which will be described below.

### [Technical Solution]

One aspect of the present invention provides an electric vehicle charging controller including a first control unit configured to perform a charging sequence for charging a battery disposed in a vehicle on the basis of a charging sequence signal received from an electric vehicle supply equipment, a second control unit configured to generate a first control signal for waking the first control unit up on the basis of the charging sequence signal, a first switch unit controlled by the first control unit and configured to transmit the charging sequence signal to the first control unit or block transmission of the charging sequence signal, and a second switch unit controlled by the second control unit and configured to transmit the charging sequence signal to the second control unit or block transmission of the charging sequence signal.

The first control unit may control the first switch unit to transmit the charging sequence signal on the basis of the first control signal.

The first control unit may turn the first switch unit on when the first control unit is switched from a sleep mode to a wake-up mode on the basis of the first control signal.

The second control unit may control the second switch unit to be turned on/off for a predetermined period of time and receive the charging sequence signal for the predetermined period of time.

The second control unit may generate the first control signal when the charging sequence signal is transmitted in a period of time in which the second switch unit is turned on.

The electric vehicle charging controller may further include a first converter unit configured to convert a direct current (DC) voltage of the battery having a first voltage value into a second voltage value and supply the converted DC voltage having the second voltage value to the second control unit.

The electric vehicle charging controller may further include a second converter unit configured to convert a DC voltage of the battery having a first voltage value into a third voltage value and supply the converted DC voltage having the third voltage value to the first control unit.

The second converter unit may convert a DC voltage of the battery having a first voltage value into a third voltage value on the basis of at least one of a first driving signal output from a controller area network (CAN) transceiver of the electric vehicle and a second driving signal output from a CAN transceiver of the electric vehicle supply equipment and the first control signal.

The first control unit may generate the second control signal and transmit the second control signal to the second converter unit when the first control unit is switched from a sleep mode to a wake-up mode on the basis of the first control signal.

Another aspect of the present invention provides an electric vehicle charging controller including a first micro controller, a second micro controller, a first switch of which a second end is connected to a first terminal of the first micro controller, and a second switch of which a first end is connected to a first terminal of the second micro controller and a second end is connected to a first end of the first switch, wherein the first end of the first switch and the second end of the second switch are electrically connected to one of signal terminals of an inlet.

The electric vehicle charging controller may further include a first converter of which a first terminal is connected to a battery of the electric vehicle and a second terminal is connected to a power supply terminal of the second micro controller.

The electric vehicle charging controller may further include a second converter, wherein a first terminal of the second converter may be connected to one of a controller area network (CAN) transceiver of the electric vehicle or a CAN transceiver of the electric vehicle supply equipment, a second terminal of the second converter may be connected to a second terminal of the second micro controller, and a third terminal may be connected to a second terminal of the first micro controller.

Still another aspect of the present invention provides a control method of charging an electric vehicle using an electric vehicle charging controller, the control method including repeatedly turning, by a second control unit, a second switch unit on and off for a predetermined period of time in a state in which a first switch unit is turned off, receiving, by the second control unit, a charging sequence signal in a state in which the second switch unit is turned on, generating, by the second control unit, a first control signal on the basis of the charging sequence signal, switching the first control unit from a sleep mode to a wake-up mode when driving power is supplied to the first control unit on the basis of the first control signal, and turning, by the first control unit, the first switch unit on and receiving the charging sequence signal.

### [Advantageous Effects]

According to one embodiment, an electric vehicle charging controller capable of reducing power consumption can be provided.

Various useful advantages and effects of the present invention are not limited to the above-described content and will be more easily understood in the process of describing specific embodiments of the present invention.

### [Description of Drawings]

FIG. 1 is a view for describing an electric vehicle charging system according to an embodiment of the present invention.
FIG. 2 is a view illustrating a configuration of the electric vehicle charging system according to the embodiment of the present invention.
FIG. 3 is a configuration diagram illustrating an electric vehicle charging controller according to an embodiment of the present invention.
FIG. 4 is a view illustrating a structure of the electric vehicle charging controller according to the embodiment of the present invention.
FIG. 5 is a view illustrating a structure of an electric vehicle charging controller according to another embodiment of the present invention.
FIGS. 6A to 6E are views illustrating an example in which the electric vehicle charging controller according to the embodiment of the present invention is driven.
FIG. 7 is a flowchart illustrating a control method of charging an electric vehicle using the electric vehicle charging controller according to the embodiment of the present invention.

### [Modes of the Invention]

Hereinafter, exemplary embodiment of the present invention will be described in detail with reference the accompanying drawings.

However, the technical spirit of the present invention is not limited to some embodiments which will be described and may be implemented in a variety of different forms, and one or more components of the embodiments may be selectively combined, substituted, and used within the range of the technical spirit.

In addition, unless clearly and specifically defined otherwise by the context, all terms (including technical and scientific terms) used herein may be interpreted as having meanings generally understood by those skilled in the art, and the meanings of generally used terms, such as those defined in commonly used dictionaries, will be interpreted in consideration of contextual meanings of the related art.

In addition, terms used in the embodiments of the present invention are considered in a descriptive sense only and not to limit the present invention.

In the present specification, unless clearly indicated otherwise by the context, singular forms include the plural forms, and in a case in which "at least one (or one or more) among A, B, and C" is described, this may include at least one combination among all possible combinations of A, B, and C.

In addition, in descriptions of components of the embodiments of the present invention, terms such as "first," "second," "A," "B," "(a)," and "(b)" may be used.

The terms are only to distinguish one element from another element, and the essence, order, and the like of the elements are not limited by the terms.

In addition, it should be understood that, when a first element is referred to as being "connected," "coupled," or "linked" to a second element, such a description may include both a case in which the first element is directly connected or coupled to the second element, and a case in which the first element is connected, coupled, or linked to the second element with a third element disposed therebetween.

In addition, when any one element is described as being formed or disposed "on" or "under" another element, such a description includes both a case in which the two elements are formed or disposed in direct contact with each other and a case in which the two elements are formed or disposed with one or more other elements interposed therebetween. In addition, when one element is described as being formed "on or under" the other element, such a description may include a case in which the one element is formed at an upper side or a lower side with respect to the other element.

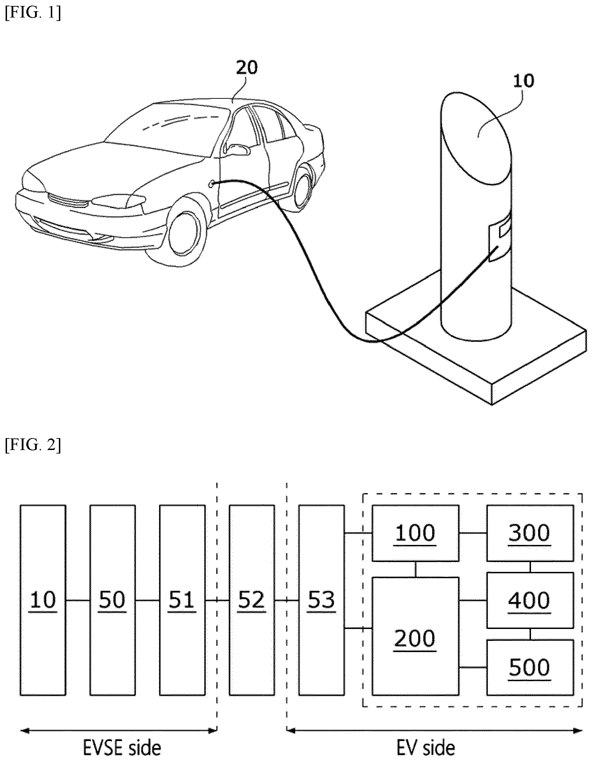

FIG. 1 is a view for describing an electric vehicle charging system according to an embodiment of the present invention.

The electric vehicle charging system according to the embodiment of the present invention may be a system for charging a battery of an electric vehicle (EV) operated by power of electric energy.

Referring to FIG. 1, the electric vehicle charging system according to one embodiment of the present invention may include an electric vehicle supply equipment (EVSE) 10 and an EV 20.

The EVSE 10 is equipment which supplies alternating current (AC) or direct current (DC) power, may be disposed in a supply, may be disposed in a home, or may be implemented in a portable type. The EVSE 10 may be used interchangeably with a supply, an AC supply, a DC supply, or the like. The EVSE 10 may receive AC or DC power from a main power source. The main power source may include a power system and the like. The EVSE 10 may transform a voltage of the AC or DC power supplied from the main power source or convert the AC or DC power and supply the transformed voltage or the converted power to the EV 20.

The EV 20 is a vehicle which receives all or a part of energy from a mounted battery to operate. The EV 20 may include not only an EV that travels using only electric energy charged in a battery, but also a plug-in hybrid electric vehicle (PHEV) that travels using an engine using a fossil fuel in addition to electric energy. The battery provided in the EV 20 may receive power from the EVSE 10 to be charged.

FIG. 2 is a view illustrating a configuration of the electric vehicle charging system according to the embodiment of the present invention.

The electric vehicle charging system according to the embodiment of the present invention may include the EVSE 10, a cable 50, a connector 51, an inlet (INT) 53, a junction box 100, an electric vehicle charging controller (EVCC) 200, a battery 300, a battery management system (BMS) 400, and an electric power control unit (EPCU) 500. Components included in the electric vehicle charging system may be divided into components for the EVSE 10 and components for the EV 20. The components for the EVSE 10 may include the EVSE 10, the cable 50, and the connector 51. The components for the EV may include the INT 53, the junction box 100, the EVCC 200, the battery 300, the BMS 400, and the EPCU 500. Such division is for convenience in the description and is not limited thereto.

First, the EVSE 10 supplies power for charging the battery 300 of the EV. The EVSE 10 may transmit the power supplied from the main power source (for example, a power system) to the EV 20. In this case, the EVSE 10 may step down a voltage of the power or covert the power supplied from the main power source and supply the power having the step-down voltage or the converted power to the EV 20. According to one embodiment, when the EVSE 10 supplies AC power to the EV 20, the EVSE 10 may transform a voltage of the AC power supplied from the main power source and supply the AC power having the transformed voltage to the EV 20. In another example, when the EVSE 10 supplies DC power to the EV 20, the EVSE 10 may convert AC power supplied from the main power source into the DC power and supply the DC power to the EV 20. The EVSE 10 may include a power conversion apparatus in order to transform a voltage of power or convert power. According to the embodiment, the EVSE 10 may include a rectifier, an isolation transformer, an inverter, a converter, and the like.

The EVSE 10 may include a charging control apparatus for transmitting and receiving various control signals, which are necessary for charging the battery 300 of the EV 20, and controlling a battery charging process. The charging control apparatus may transmit or receive the control signals to or from the EV 20 and perform the battery charging process. The control signals may include information such as charge preparation, charge stop, and proximity detecting. The charging control apparatus may include a communication apparatus for communication with the EV 20. The communication apparatus may communicate with the EV 20 through power line communication (PLC), a controller area network (CAN), or the like. The communication apparatus may be included in the charging control apparatus or may be provided separately.

In addition, the cable 50, the connector 51, and the INT 53 electrically connect the EVSE 10 and the EV.

Power and signals are transmitted between the EVSE 10 and the EV 20 through the cable 50. The cable 50 may include a power line for transmitting power, a signal line for transmitting control signals related to charging, a ground line connected the ground, and the like.

The cable 50 is connected to the EVSE 10. According to one embodiment, the EVSE 10 and the cable 50 may be directly connected without a separate connecting component. According to another embodiment, the EVSE 10 and the cable 50 may be connected through coupling a socket-outlet provided in the EVSE 10 and a plug provided on the cable 50.

The connector 51 may be connected to the cable 50, and the INT 53 may be provided in the EV 20. The connector 51 and the INT 53 may be grouped together and named as a coupler. The connector 51 and the INT 53 have structures capable of being coupled to each other, and the EV 20 and the EVSE 10 may be electrically connected through the coupling between the connector 51 and the INT 53. The INT 53 and the connector 51 may be directly connected or connected through an adaptor 52. According to one embodiment, the adapter 52 may be used when there is a difference in charging specification between of the EVSE 10 and the EV 20 and the connector 51 and the INT 53 cannot be directly connected. For example, the adapter 52 may be used to connect the connector 51 of the EVSE 10 according to the CHAdeMO standard specification and the INT 53 of the EV 20 according to the ChaoJi standard specification.

Each of the connector 51 and the INT 53 may have a plurality of pins so that the connector 51 and the INT 53 are coupled to each other. For example, one of the plurality of pins may be a pin for a control pilot (CP) port through which a CP signal is transmitted between the EVSE 10 and the EVCC 200, another pin may be a pin for a proximity detection (PD) port for detecting proximity between the connector 51 and the INT 53, and another pin may be a pin for a protective earth (PE) port connected to a protective ground of the EVSE 10. Another of the plurality of pins may be a pin for driving a motor for opening a flap of an oil-hole, another pin may be a pin for sensing the motor, another pin may be a pin for sensing a temperature, another may be a pin for sensing a light-emitting diode (LED), and another pin may be a pin for CAN communication. One of the plurality of pins may be a pin for a line for a voltage applied from a collision detection sensor in the EV 20, another pin may be a battery pin for supplying charging power to the EV 20, and another pin may be a pin for high-voltage protection. However, the number and functions of the pins are not limited thereto and may be variously changed.

The junction box 100 transmits power supplied from the EVSE 10 to the battery 300. The power supplied from the EVSE 10 is a high voltage, and when the power is directly supplied to the battery 300, the battery 300 may be damaged due to an inrush current. The junction box 100 may include at least one relay to prevent the battery from being damaged due to the inrush current.

The EVCC 200 may control some or all processes related to battery charging of the EV 20. The EVCC 200 may be referred to as an electric vehicle communication controller (EVCC).

The EVCC 200 may communicate with the EVSE 10. The EVCC 200 may transmit and receive control commands regarding a battery charging process to and from the EVSE 10. According to one embodiment, the EVCC 200 may communicate with the charging control apparatus provided in the EVSE 10 and may transmit and receive control commands regarding the battery charging process to and from the charging control apparatus.

The EVCC 200 may communicate with the EV 20. The EVCC 200 may receive control commands regarding the battery charging process from the EV 20. According to one embodiment, the EVCC 200 may communicate with the BMS 400 of the EV 20 and may receive control commands regarding the battery charging process from the BMS 400. According to another embodiment, the EVCC 200 may communicate with the EPCU 500 of the EV 20 and receive control commands regarding the battery charging process from the EPCU 500.

The EVCC 200 may include a micro controller unit (MCU), a communication apparatus, a relay apparatus, and the like to perform the above-described functions.

The BMS 400 manages an energy state of the battery 300 in the EV 20. The BMS 400 may monitor a usage status of the battery 300 and perform control for efficient energy distribution. For example, the BMS 400 may transmit an available power status of the EV 20 to a vehicle control unit (VCU), an inverter, and like for efficient use of energy. As another example, the BMS 400 may correct a voltage deviation per cell of the battery 300 or drive a cooling fan to maintain an appropriate temperature of the battery 300.

The EPCU 500 is a unit which controls an overall operation of the EV including control of the motor. The EPCU 500 may include a motor control unit (MCU), a low voltage DC-to-DC converter (LDC), and a VCU. The MCU may be referred to as an inverter. The MCU may receive DC power from the battery and convert the DC power into three-phase AC power and control the motor according to a command of the VCU. The LDC may convert high-voltage power into low-voltage (for example, 12 V) power and supply the low-voltage power to each component of the EV 20. The VCU serves to maintain the performance of a general system of the EV 20. The VCU and various devices such as the MCU and the BMS 400 may perform various functions such as charging and driving.

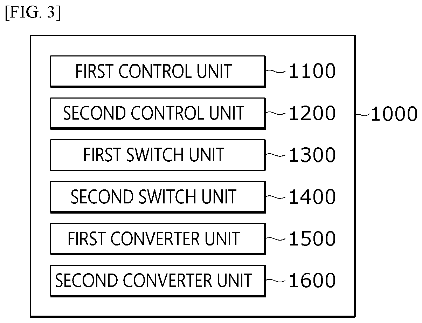

FIG. 3 is a configuration diagram illustrating an electric vehicle charging controller according to an embodiment of the present invention.

Referring to FIG. 3, an EVCC 1000 according to the embodiment of the present invention may include a first control unit 1100, a second control unit 1200, a first switch unit 1300, a second switch unit 1400, a first converter unit 1500, and a second converter unit 1600. The EVCC 1000 may be the above-described EVCC.

First, the first control unit 1100 may perform a charging sequence for charging a battery disposed in a vehicle on the basis of a charging sequence signal received from an EVSE.

The first control unit 1100 may control the first switch unit 1300. The first control unit 1100 may control the first switch unit 1300 to transmit the charging sequence signal based on a first control signal. Specifically, when the first control unit 1100 is switched from a sleep mode to a wake-up mode on the basis of the first control signal, the first switch unit 1300 may be turned on. In this case, the charging sequence signal may be a signal transmitted and received between an EV and the EVSE for charging the battery of the EV. According to one embodiment, the charging sequence signal may be a signal for detecting proximity between an inlet of the EV side and a coupler at the EVSE but is not limited thereto. According to one embodiment, the charging sequence signal may vary according to a standard specification for EV charging.

The first control unit 1100 may generate a second control signal when switched from the sleep mode to the wake-up mode on the basis of the first control signal. The first control unit 1100 may transmit the second control signal to the second converter unit 1600. The second control signal may be a signal for driving the second converter unit 1600.

The first control unit 1100 may be implemented as a micro controller unit (MCU).

The second control unit 1200 may generate a first control signal on the basis of the charging sequence signal. The first control signal may wake the first control unit 1100 up. Specifically, the first control signal is a signal for driving the second converter unit 1600, and the first control unit 1100 may be woken up as the second converter unit 1600 is driven on the basis of the first control signal.

The second control unit 1200 may control the second switch unit 1400. The second control unit 1200 may control the second switch unit 1400 to be turned on/off for a predetermined period of time. The second control unit 1200 may receive the charging sequence signal for the predetermined period of time on the basis of the control of the second switch unit 1400 to be turned on/off. The second control unit 1200 may generate the first control signal when the charging sequence signal is transmitted in a period of time in which the second switch unit 1400 is turned on. Meanwhile, the predetermined period may be set differently according to a type of charging sequence signal. In one embodiment, when the charging sequence signal is a signal regarding activation of an unlock button, the second switch unit 1400 may repeat an operation of being turned off for 118 [ms] and turned on for 10 [ms]. As another example, when the charging sequence signal is a signal for checking proximity, the second switch unit 1400 may repeat an operation of being turned off for 502 [ms] and turned on for 10 [ms].

The second control unit 1200 may be implemented as a micro controller unit (MCU).

The first switch unit 1300 may transmit the charging sequence signal to the first control unit 1100 or block transmission of the charging sequence signal. The first switch unit 1300 may be controlled by the first control unit 1100.

The first switch unit 1300 may be implemented using a switch element such as a bipolar junction transistor (BJT) or metal oxide semiconductor field effect transistor (MOSFET) but is not limited thereto. The first switch unit 1300 may be implemented using a switch element capable of opening and closing a transmission line or line of a signal and the like.

The second switch unit 1400 may transmit the charging sequence signal to the second control unit 1200 or block transmission of the charging sequence signal. The second switch unit 1400 may be controlled by the second control unit 1200.

The second switch unit 1400 may be implemented using a switch element such as a BJT or MOSFET but is not limited thereto. The second switch unit 1400 may be implemented using a switch element capable of opening and closing a transmission line or line of a signal and the like.

The first converter unit 1500 may convert a DC voltage of a battery having a first voltage value to a DC voltage having a second voltage value. The converted DC voltage having the second voltage value may be supplied to the second control unit 1200.

The first converter unit 1500 may be implemented as a DC/DC converter. According to one embodiment, the first converter unit 1500 may be implemented as a high efficiency DC/DC converter.

The second converter unit 1600 may convert the DC voltage of the battery having the first voltage value to a DC voltage having a third voltage value. The second converter unit 1600 may convert the DC voltage of the battery having the first voltage value to the DC voltage having the third voltage value on the basis of at least one of a first driving signal output from a CAN transceiver of the EV and a second driving signal output from a CAN transceiver of the EVSE, and a first control signal. The second converter unit 1600 may supply the converted DC voltage having the third voltage value to the first control unit 1100.

The second converter unit 1600 may be implemented as a DC/DC converter. According to one embodiment, the second converter unit 1600 may be implemented as a high efficiency DC/DC converter.

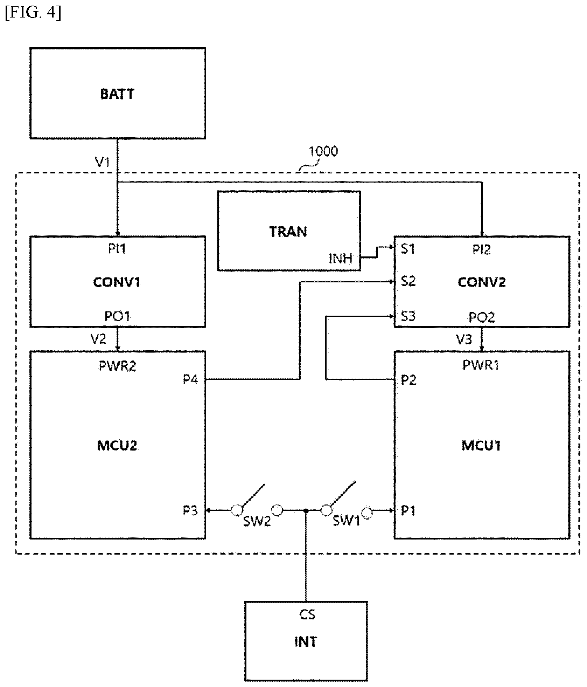

FIG. 4 is a view illustrating a structure of the EVCC according to the embodiment of the present invention.

Referring to FIG. 4, the EVCC 1000 according to one embodiment of the present invention may include a first micro controller MCU1, a second micro controller MCU2, a first switch SW1, a second switch SW2, a first converter CONV1, a second converter CONV2, and a CAN transceiver TRAN.

The first micro controller MCU1 may include a first terminal P1, a second terminal P2, and a third terminal PWR1. The first terminal P1, the second terminal P2, and the third terminal PWR1 of the first micro controller MCU1 may be electrically connected to the second converter CONV2 and an inlet INT.

Specifically, the first terminal P1 of the first micro controller may be connected to the first switch SW1. When the first switch SW1 is turned on, the first micro controller MCU1 may receive a charging sequence signal of the EVSE through the first terminal P1.

The second terminal P2 of the first micro controller MCU1 may be connected to the second converter CONV2. The first micro controller MCU1 may transmit a second control signal to the second converter CONV2 through the second terminal P2.

The third terminal PWR1 of the first micro controller MCU1 may be connected to the second converter CONV2. The first micro controller MCU1 may receive a driving power V3 from the second converter CONV2 through the third terminal PWR1.

The second micro controller MCU2 may include a first terminal P3, a second terminal P4, and a third terminal PWR2. The first terminal P3, the second terminal P4, and the third terminal PWR2 of the second micro controller MCU2 may be electrically connected to the first converter CONV1, the second converter CONV2, and the inlet INT.

Specifically, the first terminal ruler P3 of the second micro controller MCU2 may be connected to the second switch SW2. When the second switch SW2 is turned on, the second micro controller MCU2 may receive a charging sequence signal of the EVSE through the first terminal P3.

The second terminal P4 of the second micro controller MCU2 may be connected to the second converter CONV2. The second micro controller MCU2 may transmit a first control signal to the second converter CONV2 through the second terminal P4.

The third terminal PWR2 of the second micro controller MCU2 may be connected to the first converter CONV1. The second micro controller MCU2 may receive a driving power V2 from the first converter CONV1 through the third terminal PWR2.

Although not illustrated in the drawing, each of the first micro controller MCU1 and the second micro controller MCU2 may further include a plurality of terminals for transmitting and receiving data or transmitting and receiving control signals between each other. According to one embodiment, each of the first micro controller MCU1 and the second micro controller MCU2 may further include a terminal for transmitting and receiving a reset signal, a terminal for transmitting and receiving an interrupt signal, a terminal for transmitting and receiving a universal asynchronous receiver/transmitter (UART) signal, a terminal for transmitting and receiving a UART activation signal, and the like. The plurality of terminals may be electrically connected to corresponding terminals.

The first switch SW1 may be electrically connected to the first micro controller MCU1, the second switch SW2, and the inlet INT. A first end of the first switch SW1 may be connected to a second end of the second switch SW2. The first end of the first switch SW1 may be electrically connected to the inlet INT. A second of the first switch SW1 may be connected to the first terminal P1 of the first micro controller MCU1. Meanwhile, a pull-up resistor may be disposed at one end of the first switch SW1. For example, a pull-up resistor may be disposed between the first end of the first switch SW1 and the inlet INT, and a design change for a magnitude of the resistor is possible by those skilled in the art in consideration of an electric vehicle charging system.

The second switch SW2 may be electrically connected to the second micro controller MCU2, the first switch SW1, and the inlet INT. A first end of the second switch SW2 may be connected to the first terminal P3 of the second micro controller MCU2. The second end of the second switch SW2 may be connected to the first end of the first switch SW1. The second end of the second switch SW2 may be electrically connected to the inlet INT. Meanwhile, a pull-up resistor may be disposed at one end of the second switch SW2. For example, a pull-up resistor may be disposed between the second end of the second switch SW2 and the inlet INT, and a design change for a magnitude of the resistor is possible by those skilled in the art in consideration of the electric vehicle charging system.

As described above, the first end of the first switch SW1 and the second end of the second switch SW2 may be electrically connected to one of signal terminals CS of the inlet INT. Accordingly, a charging sequence signal transmitted through the inlet INT may be transmitted to the first switch SW1 and the second switch SW2 and transmitted to at least one of the first micro controller MCU1 or the second micro controller MCU2 according to an on/off state of each of the first switch SW1 and the second switch SW2.

The first converter CONV1 may include a first terminal PI1 and a second terminal PO1. The first converter CONV1 may be electrically connected to a battery BATT and the second micro controller MCU2 through the first terminal PI1 and the second terminal PO1.

The first terminal PI1 of the first converter CONV1 may be connected to the battery BATT of the EV. The first converter CONV1 may receive power of the battery BATT through the first terminal PI1. The second terminal PO1 of the first converter CONV1 may be connected to the third terminal PWR2 of the second micro controller MCU2. The first converter CONV1 may supply power V2 to the second micro controller MCU2 through the second terminal PO1. According to one embodiment, the first converter CONV1 may convert a DC voltage of the power supplied from the battery BATT into a DC voltage of 5 [V] and supply the DC voltage of 5 [V] to the second micro controller MCU2.

The second converter CONV2 may include a first terminal S1, a second terminal S2, a third terminal S3, a fourth terminal PI2, and a fifth terminal PO2. The second converter CONV2 may be electrically connected to the battery BATT, the CAN transceiver TRAN, the first micro controller MCU1, and the second micro controller MCU2 through the first terminal S1, the second terminal S2, the third terminal S3, the fourth terminal PI2, and the fifth terminal PO2.

The first terminal S1 of the second converter CONV2 may be connected to the CAN transceiver TRAN. The first terminal S1 of the second converter CONV2 may be connected to an INH terminal INH of the CAN transceiver TRAN. The CAN transceiver TRAN may be the CAN transceiver of the EV or the CAN transceiver of the EVSE. In the case of the CAN transceiver of the EVSE, the CAN transceiver may not be included in the EVCC.

The second terminal S2 of the second converter CONV2 may be connected to the second micro controller MCU2. The second terminal S2 of the second converter CONV2 may be connected to the second terminal P4 of the second micro controller MCU2.

The third terminal S3 of the second converter CONV2 may be connected to the first micro controller MCU1. In the third terminal S3 of the second converter CONV2 may be connected to the second terminal P2 of the first micro controller MCU1.

The fourth terminal PI2 of the second converter CONV2 may be connected to the battery BATT.

The fifth terminal PO2 of the second converter CONV2 may be connected to the first micro controller MCU1. The fifth terminal PO2 of the second converter CONV2 may be connected to the third terminal PWR1 of the first micro controller MCU1.

The second converter CONV2 may supply power V3 to the first micro controller MCU1 through the fifth terminal PO2. According to one embodiment, the first converter CONV1 may convert a DC voltage of power V1 supplied from the battery BATT into a DC voltage of 3.3 [V] and supply the DC voltage of 3.3 [V] to the first micro controller MCU1.

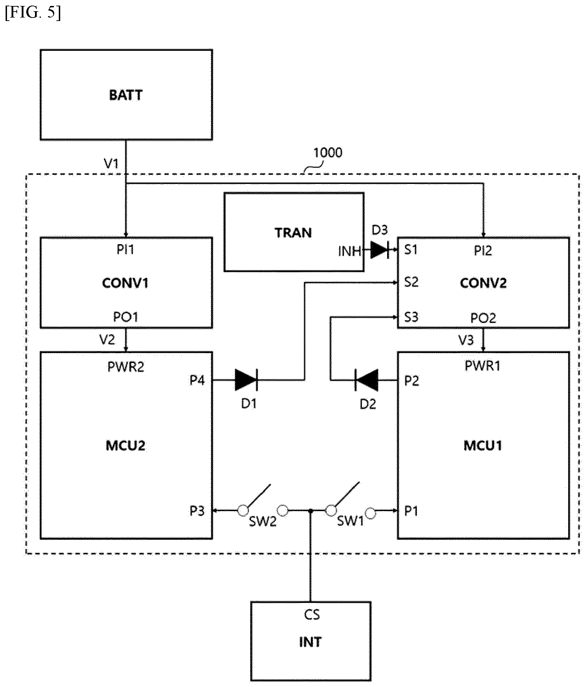

FIG. 5 is a view illustrating a structure of an EVCC according to another embodiment of the present invention.

Referring to FIG. 5, an EVCC 1000 may further include at least one among a first diode D1, a second diode D2, and a third diode D3 in addition to the components illustrated in FIG. 4.

The first diode D1 may be disposed between a second micro controller MCU2 and a second converter CONV2. The first diode D1 may be disposed on a line connecting the second micro controller MCU2 and the second converter CONV2. An anode terminal of the first diode D1 may be connected to a second terminal P4 of the second micro controller MCU2, and a cathode terminal thereof may be connected to a second terminal S2 of the second converter CONV2. The first diode D1 may block a reverse voltage applied from the second converter CONV2 to the second micro controller MCU2. Accordingly, breakage of the second micro controller MCU2 can be prevented.

The second diode D2 may be disposed between a first micro controller MCU1 and the second converter CONV2. The second diode D2 may be disposed on a line connecting the first micro controller MCU1 and the second converter CONV2. An anode terminal of the second diode D2 may be connected to a second terminal P2 of the first micro controller MCU1, and a cathode terminal thereof may be connected to a third terminal S3 of the second converter CONV2. The second diode D2 may block a reverse voltage applied from the second converter CONV2 to the first micro controller MCU1. Accordingly, breakage of the first micro controller MCU1 can be prevented.

The third diode D3 may be disposed between a CAN transceiver TRAN and the second converter CONV2. The third diode D3 may be disposed on a line connecting the CAN transceiver TRAN and the second converter CONV2. An anode terminal of the third diode D3 may be connected to an INH terminal INH of the CAN transceiver TRAN, and a cathode terminal thereof may be connected to a first terminal S1 of the second converter CONV2. The third diode D3 may block a reverse voltage applied from the second converter CONV2 to the CAN transceiver TRAN. Accordingly, breakage of the CAN transceiver TRAN can be prevented.

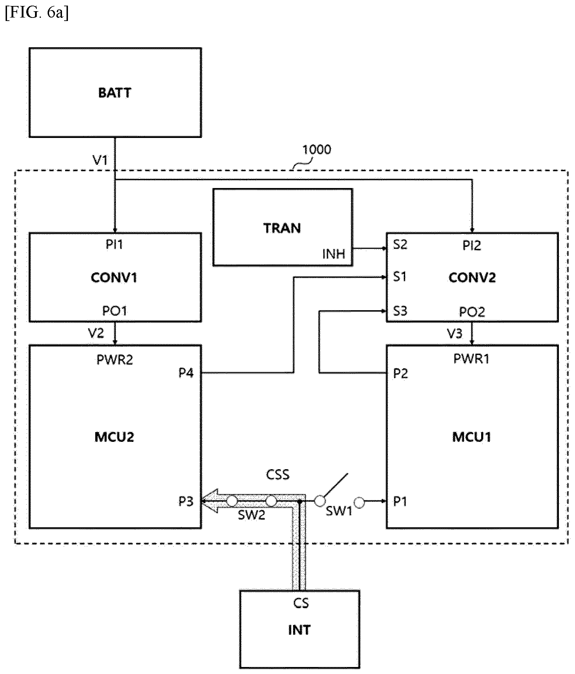

FIGS. 6A to 6E are views illustrating an example in which the EVCC according to the embodiment of the present invention is driven.

An example will be described with reference to FIGS. 6A to 6E based on the circuit configuration of FIG. 4 but may be described based on the circuit configuration of FIG. 5.

First, as illustrated in FIG. 6A, the first micro controller MCU1 may be in a sleep mode. In one embodiment, the sleep mode of the first micro controller MCU1 may be a state in which the battery BATT of the EV has been completely charged. In one embodiment, the sleep mode of the first micro controller MCU1 may be a standby state before the battery BATT starts to be charged. When the first micro controller MCU1 is in the sleep mode, a state in which the first switch SW1 is turned off may be maintained. The second switch SW2 may be repeatedly turned on and off for a predetermined period of time. When the second switch SW2 is turned on and a charging sequence signal CSS is received through the inlet INT, the second micro controller MCU2 may receive the charging sequence signal CSS. The second micro controller MCU2 may receive driving power V2 from the first converter CONV1. The first converter CONV1 may receive power V1 from the battery BATT and convert the power V1 into the driving power V2.

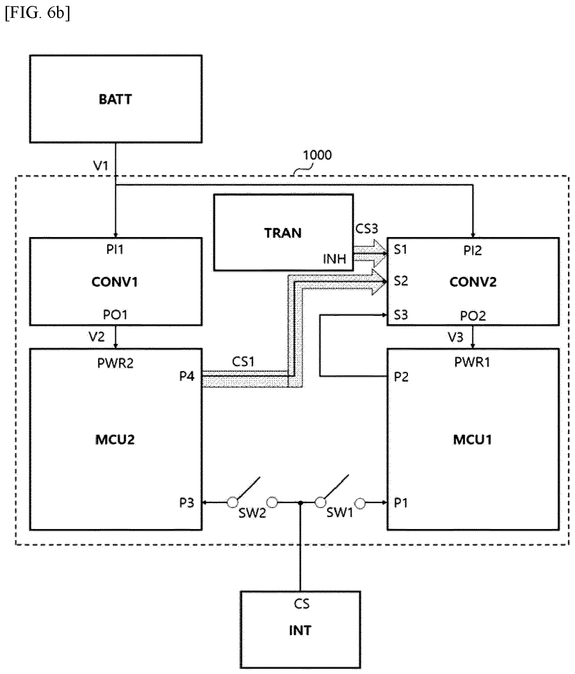

Then, referring to FIG. 6B, the second micro controller MCU2 may generate a first control signal CS1 on the basis of the charging sequence signal CSS. The second micro controller MCU2 may transmit the generated first control signal CS1 to the second converter CONV2. In this case, the second converter CONV2 may receive a signal CS3 from the CAN transceiver. The second converter CONV2 may be driven according the first control signal CS1 and the signal CS3 received from the CAN transceiver. Then, the second converter CONV2 may generate a driving power V3 by converting the power V1 supplied from the battery BATT.

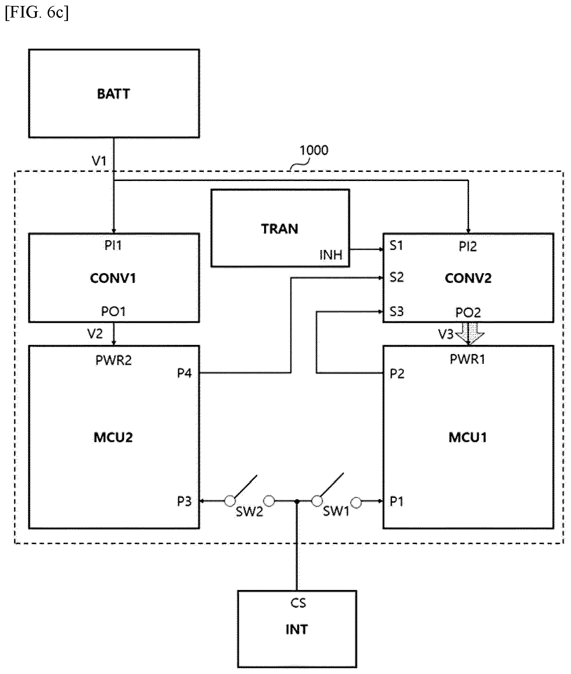

Then, referring to FIG. 6C, the second converter CONV2 may transmit the generated driving power V3 to the first micro controller MCU1. The first micro controller MCU1 may be operated by the driving power V3. The first micro controller MCU1 may be woken up by the driving power V3.

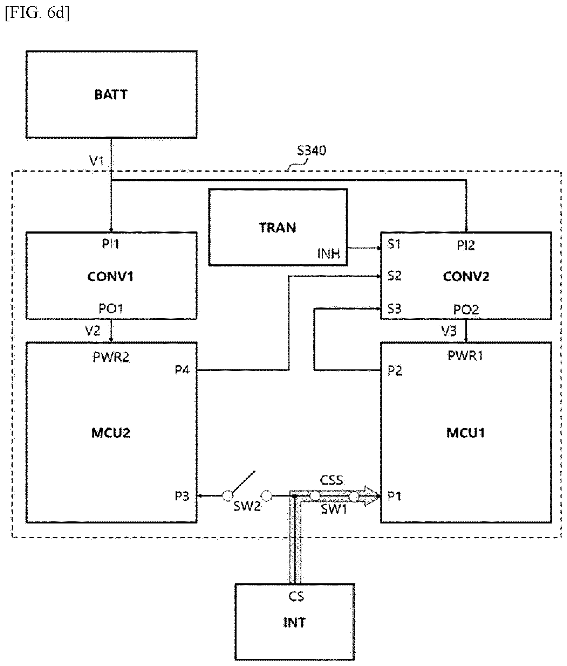

Then, referring to FIG. 6D, the first micro controller MCU1 may turn the first switch SW1 on when woken up. When the first switch SW1 is turned on, the first micro controller MCU1 may receive the charging sequence signal CSS through the inlet INT. According to one embodiment, when the first micro controller MCU1 is woken up, the first micro controller MCU1 may switch the second micro controller MCU2 into a sleep mode, and, when the second micro controller MCU2 is switched to the sleep mode, the second micro controller MCU2 may maintain a state in which the second switch SW2 is turned off.

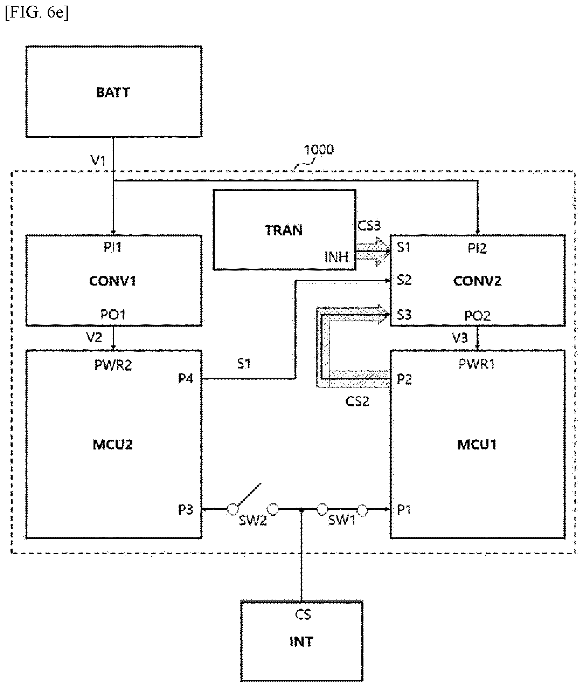

Then, referring to FIG. 6E, the first micro controller MCU1 may generate a second control signal CS2 on the basis of the charging sequence signal CSS. In addition, the second control signal CS2 may be transmitted to the second converter CONV2. The second converter CONV2 may be driven according to the second control signal CS2 and the signal CS3 received from the CAN transceiver TRAN.

In the case of no first switch SW1, even when the second micro controller MCU2 enters the sleep mode, the second micro controller MCU2 continuously receives power from the battery BATT, and the power is continuously consumed due to a sleep current of a circuit (the inlet INT or other receiving circuits) for receiving the charging sequence signal CSS. In particular, when a connector and the inlet INT are connected in the sleep mode, since connection between the first micro controller MCU1 and the EVSE is maintained, consumption of a sleep current becomes larger. Accordingly, not only a lifetime of the battery BATT may be reduced by causing continuous power discharge of the battery BATT of the EV, but a situation in which operation cannot be started due to the discharge of the battery BATT may also occur. However, in the present invention, since the first switch SW1 is turned off in the sleep mode, the first micro controller MCU1 is electrically isolated from the circuit for receiving the charging sequence signal CSS, the an EVSE, and the like. Accordingly, discharge of the battery BATT due to the sleep current can be prevented.

However, when the sleep mode is continuously maintained, since the first micro controller MCU1 cannot receive the charging sequence signal CSS from the EVSE, a charging sequence of the battery BATT may not be performed. Accordingly, in the present invention, while the second switch SW2 is repeatedly turned on and off for a predetermined period of time, as the charging sequence signal CSS received from the EVSE is detected, the second micro controller MCU2 switches the first micro controller MCU1 from the sleep mode to a wake-up mode. Accordingly, the charging sequence of the EV may be performed. Since the second switch SW2 repeatedly turned on and off for the predetermined period of time, current consumption of the second micro controller MCU2 is low, and thus discharge of the battery BATT can be minimized.

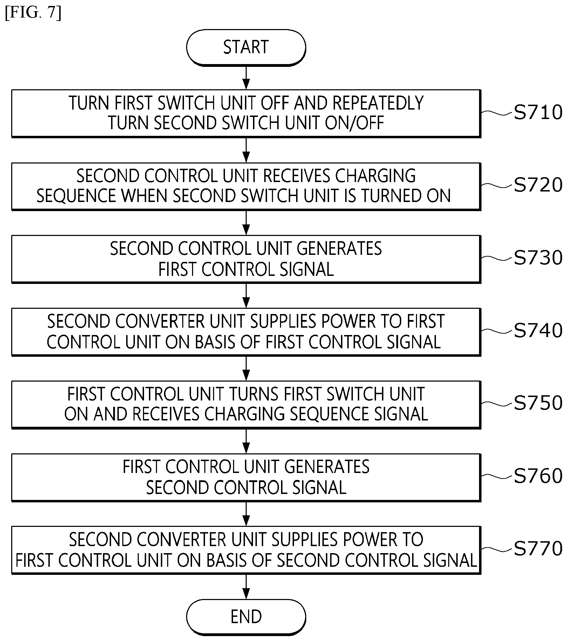

FIG. 7 is a flowchart illustrating a control method of charging the EV using the EVCC according to the embodiment of the present invention.

First, the first switch unit may be turned off, and the second switch unit may be repeatedly turned on and turned off for a predetermined period of time by control of the second control unit (S710). That is, the second control unit may repeatedly turn the second switch unit on and off for the predetermined period of time in a state in which the first switch unit is turned off. In this case, the second control unit may receive power for driving from the first converter unit. According to one embodiment, the first converter unit may convert a DC voltage of the battery having a first voltage value to a DC voltage having a second voltage value, and supply the converted DC voltage having the second voltage to the second control unit.

In a period of time in which the second switch unit is turned on, the second control unit may receive a charging sequence signal (S720). That is, the second control unit may receive the charging sequence signal in a state in which the second switch unit is turned on.

Then, the second control unit may generate a first control signal on the basis of the charging sequence signal (S730). The first control signal may be transmitted to the second converter unit. The first control signal may be used to switch the first control unit from a sleep mode to a wake-up mode.

The second converter unit may supply driving power to the first control unit on the basis of the first control signal (S740). According to one embodiment, the second converter unit may convert a DC voltage of the battery having a first voltage value into a DC voltage having a third voltage value, and supply the converted DC voltage having the third voltage value to the first control unit. Specifically, the second converter unit may convert the DC voltage of the battery having the first voltage value into the DC voltage having the third voltage value on the basis of at least one of a first driving signal output from the CAN transceiver of the EV and a second driving signal output from the CAN transceiver of the EVSE and the first control signal. The second converter unit may supply driving power having the third voltage value to the first control unit. The second control unit may be switched from a sleep mode to a wake-up mode when the driving power is supplied.

In the operation S740, when the sleep mode is switched to the wake-up mode on the basis of the first control signal, the first control unit may control the first switch unit to be turned on and receive the charging sequence signal (S750). That is, when the driving power is supplied on the basis of the first control signal, the first control unit may be switched from the sleep mode to the wake-up mode and may turn the first switch unit on and receive the charging sequence signal.

In addition, the first control unit may generate a second control signal on the basis of the charging sequence signal (S760). The second control signal may be transmitted to the second converter unit.

The second converter unit may supply driving power to the first control unit on the basis of the second control signal (S770).

Then, the first control unit may perform a charging sequence for charging the battery disposed in the vehicle on the basis of the charging sequence signal received from the EVSE.

Tables 1 to 8 below show simulation results of current consumption of the second control unit. Tables 1 to 8 show simulation results in a sleep mode (that is, a state in which the first switch is turned off).

**[Table 1]**

| No | Sleep time [ms] | Operating time [ms] | Vehicle CAN IC [uA] | Other leakages [uA] | SIGNAL 1 [nA] | SIGNAL2 [uA] | TOTAL [uA] |
|---|---|---|---|---|---|---|---|
| 1 | 0 | FULL | 30 | 700 | 1 | 1,650 | 2,381 |
| 2 | 1,000 | 50 | 30 | 125 | 1 | 83 | 239 |
| 3 | 1,000 | 25 | 30 | 108 | 1 | 41 | 180 |
| 4 | 1,000 | 10 | 30 | 97 | 1 | 17 | 145 |
| 5 | 500 | 10 | 30 | 104 | 1 | 33 | 168 |

**[Table 2]**

| No | Sleep time [ms] | Operating time [ms] | Vehicle CAN IC [uA] | Other leakages [uA] | SIGNAL 1 [nA] | SIGNAL2 [uA] | TOTAL [uA] |
|---|---|---|---|---|---|---|---|
| 1 | 0 | FULL | 30 | 700 | 1,515 | 11,725 | 13,970 |
| 2 | 1,000 | 50 | 30 | 125 | 76 | 586 | 817 |
| 3 | 1,000 | 25 | 30 | 108 | 38 | 293 | 469 |
| 4 | 1,000 | 10 | 30 | 97 | 15 | 117 | 259 |
| 5 | 500 | 10 | 30 | 104 | 25 | 25 | 184 |

**[Table 3]**

| No | Sleep time [ms] | Operati ng time [ms] | Vehicle CAN IC [uA] | EVSE CAN IC [uA] | Other leakage s [uA] | SIGNA L1 [uA] | SIGNA L2 [uA] | SIGNA L3 [uA] | SIGNA L4 [uA] | TOTAL [uA] |
|---|---|---|---|---|---|---|---|---|---|---|
| 1 | 0 | FULL | 30 | 30 | 700 | 1 | 1,650 | 1,000 | 1,000 | 4,411 |
| 2 | 1,000 | 50 | 30 | 30 | 125 | 1 | 83 | 50 | 50 | 369 |
| 3 | 1,000 | 25 | 30 | 30 | 108 | 1 | 41 | 25 | 25 | 260 |
| 4 | 1,000 | 10 | 30 | 30 | 97 | 1 | 17 | 10 | 10 | 195 |
| 5 | 500 | 10 | 30 | 30 | 104 | 1 | 33 | 20 | 20 | 238 |

**[Table 4]**

| No | Sleep time [ms] | Operati ng time [ms] | Vehicle CAN IC [uA] | EVSE CAN IC [uA] | Other leakage s [uA] | SIGNA L1 [uA] | SIGNA L2 [uA] | SIGNA L3 [uA] | SIGNA L4 [uA] | TOTAL [uA] |
|---|---|---|---|---|---|---|---|---|---|---|
| 1 | 0 | FULL | 30 | 30 | 700 | 1,515 | 11,725 | 15,500 | 1,000 | 30,500 |
| 2 | 1,000 | 50 | 30 | 30 | 125 | 76 | 586 | 775 | 50 | 1,672 |
| 3 | 1,000 | 25 | 30 | 30 | 108 | 38 | 293 | 388 | 25 | 911 |
| 4 | 1,000 | 10 | 30 | 30 | 97 | 15 | 117 | 155 | 10 | 454 |
| 5 | 500 | 10 | 30 | 30 | 104 | 25 | 0 | 25 | 20 | 234 |

**[Table 5]**

| No | Sleep time [ms] | Operatin g time [ms] | Vehicle CAN IC [uA] | EVSE CAN IC [uA] | Other leakages [uA] | SIGNAL 1 [uA] | SIGNAL 2 [uA] | SIGNAL 3 [uA] | TOTAL [uA] |
|---|---|---|---|---|---|---|---|---|---|
| 1 | 0 | FULL | 30 | 30 | 700 | 1 | 1,650 | 1 | 2,412 |
| 2 | 1,000 | 50 | 30 | 30 | 125 | 1 | 83 | 1 | 270 |
| 3 | 1,000 | 25 | 30 | 30 | 108 | 1 | 41 | 1 | 211 |
| 4 | 1,000 | 10 | 30 | 30 | 97 | 1 | 17 | 1 | 176 |
| 5 | 500 | 10 | 30 | 30 | 104 | 1 | 33 | 1 | 199 |

**[Table 6]**

| No | Sleep time [ms] | Operating time [ms] | Vehicle CAN IC [uA] | EVSE CAN IC [uA] | Other leakages [uA] | SIGNAL 1 [nA] | SIG NA L2 [uA ] | SIGNA L3 [uA] | TOTA L [uA] |
|---|---|---|---|---|---|---|---|---|---|
| 1 | 0 | FULL | 30 | 30 | 700 | 1,515 | 11,7 25 | 2,500 | 16,500 |
| 2 | 1,000 | 50 | 30 | 30 | 125 | 76 | 586 | 125 | 972 |
| 3 | 1,000 | 25 | 30 | 30 | 108 | 38 | 293 | 63 | 561 |
| 4 | 1,000 | 10 | 30 | 30 | 97 | 15 | 117 | 25 | 314 |
| 5 | 500 | 10 | 30 | 30 | 104 | 25 | 0 | 0 | 189 |

**[Table 7]**

| No | Sleep time [ms] | Operati ng time [ms] | Vehicle CAN IC [uA] | EVSE CAN IC [uA] | Other leakage s [uA] | SIGNA L1 [uA] | SIGNA L2 [uA] | SIGNA L3 [uA] | SIGNA L4 [uA] | TOTAL [uA] |
|---|---|---|---|---|---|---|---|---|---|---|
| 1 | 0 | FULL | 30 | 30 | 700 | 1 | 1,650 | 1 | 1 | 2,413 |
| 2 | 1,000 | 50 | 30 | 30 | 125 | 1 | 83 | 1 | 1 | 271 |
| 3 | 1,000 | 25 | 30 | 30 | 108 | 1 | 41 | 1 | 1 | 212 |
| 4 | 1,000 | 10 | 30 | 30 | 97 | 1 | 17 | 1 | 1 | 177 |
| 5 | 500 | 10 | 30 | 30 | 104 | 1 | 33 | 1 | 1 | 200 |

**[Table 8]**

| No | Sleep time [ms] | Operati ng time [ms] | Vehicle CAN IC [uA] | EVSE CAN IC [uA] | Other leakage s [uA] | SIGNA L1 [uA] | SIGNA L2 [uA] | SIGNA L3 [uA] | SIGNA L4 [uA] | TOTAL [uA] |
|---|---|---|---|---|---|---|---|---|---|---|
| 1 | 0 | FULL | 30 | 30 | 700 | 1,515 | 11,725 | 1 | 4,167 | 18,168 |
| 2 | 1,000 | 50 | 30 | 30 | 125 | 76 | 586 | 1 | 208 | 1,056 |
| 3 | 1,000 | 25 | 30 | 30 | 108 | 38 | 293 | 1 | 104 | 604 |
| 4 | 1,000 | 10 | 30 | 30 | 97 | 15 | 117 | 1 | 42 | 332 |
| 5 | 500 | 10 | 30 | 30 | 104 | 25 | 0 | 1 | 0 | 190 |

Tables 1 and 2 show current consumption of a charging system in a first type in a plug-off state and a plug-on state, Tables 3 and 4 show current consumption of a charging system in a second type in a plug-off state and a plug-on state, and Tables 5 and 6 show current consumption of a charging system in a third type in a plug-off state and a plug-on state. Tables 7 and 8 show current consumption of a charging system in a fourth type in a plug-off state and a plug-on state. The charging systems in each type may use different numbers of charging sequence signals. Referring to Tables 1 to 8, since some parts such as an integrated circuit (ICs) for CAN communication receive power for driving from the battery regardless of operation of turning the second switch on/off, the same current is consumed regardless of the operation of the turning the second switch unit on/off.

On the contrary, power consumption related to a charging sequence signal varies according to an operation period. For example, in a case in which the second switch unit is repeatedly turned on/off at a predetermined interval, it can be seen that power consumption related to the charging sequence signal is significantly reduced in each of the plug-off state and the plug-on state compared to a case in which a sleep time is 0 and an operation time is FULL. When the components such as the first switch, the second switch, and the second control unit are not provided, and a charging sequence signal is input to the first control unit, power consumed by the first control unit in relation to the charging sequence signal may be greater than that of the case in which the sleep time is 0 and the operation time is FULL. That is, such simulation results show that, when the EVCC is implemented according to the embodiment of the present invention, there is an advantage of significantly reducing power consumption in the sleep mode.

While the present invention has been mainly described above with reference to embodiments, it will be understood by those skilled in the art that the present invention is not limited to the embodiments, the embodiments are only exemplary, and various modifications and applications not exemplified above may fall within the range of the present invention without departing from the essential features of the present embodiments. For example, components specifically described in the embodiments may be modified and implemented. In addition, it should be understood that differences related to modifications and applications fall within the scope of the present invention defined by the appended claims.

## Claims

1. An electric vehicle charging controller comprising:
a first control unit configured to perform a charging sequence for charging a battery disposed in a vehicle on the basis of a charging sequence signal received from an electric vehicle supply equipment;
a second control unit configured to generate a first control signal for waking the first control unit up on the basis of the charging sequence signal;
a first switch unit controlled by the first control unit and configured to transmit the charging sequence signal to the first control unit or block transmission of the charging sequence signal; and
a second switch unit controlled by the second control unit and configured to transmit the charging sequence signal to the second control unit or block transmission of the charging sequence signal.

2. The electric vehicle charging controller of claim 1, wherein the first control unit controls the first switch unit to transmit the charging sequence signal on the basis of the first control signal.

3. The electric vehicle charging controller of claim 2, wherein the first control unit turns the first switch unit on when the first control unit is switched from a sleep mode to a wake-up mode on the basis of the first control signal.

4. The electric vehicle charging controller of claim 1, wherein the second control unit controls the second switch unit to be turned on/off for a predetermined period of time and receives the charging sequence signal for the predetermined period of time.

5. The electric vehicle charging controller of claim 4, wherein the second control unit generates the first control signal when the charging sequence signal is transmitted in a period of time in which the second switch unit is turned on.

6. The electric vehicle charging controller of claim 1, further comprising a first converter unit configured to convert a direct current (DC) voltage of the battery having a first voltage value into a second voltage value and supply the converted DC voltage having the second voltage value to the second control unit.

7. The electric vehicle charging controller of claim 1, further comprising a second converter unit configured to convert a direct current (DC) voltage of the battery having a first voltage value into a third voltage value and supply the converted DC voltage having the third voltage value to the first control unit.

8. The electric vehicle charging controller of claim 1, wherein the second converter unit converts a direct current (DC) voltage of the battery having a first voltage value into a third voltage value on the basis of at least one of a first driving signal output from a controller area network (CAN) transceiver of the electric vehicle and a second driving signal output from a CAN transceiver of the electric vehicle supply equipment and the first control signal.

9. The electric vehicle charging controller of claim 8, wherein the first control unit generates the second control signal and transmits the second control signal to the second converter unit when the first control unit is switched from a sleep mode to a wake-up mode on the basis of the first control signal.

10. An electric vehicle charging controller comprising:
a first micro controller;
a second micro controller;
a first switch of which a second end is connected to a first terminal of the first micro controller; and
a second switch of which a first end is connected to a first terminal of the second micro controller and a second end is connected to a first end of the first switch,
wherein the first end of the first switch and the second end of the second switch are electrically connected to one of signal terminals of an inlet.

11. The electric vehicle charging controller of claim 10, further comprising a first converter of which a first terminal is connected to a battery of the electric vehicle and a second terminal is connected to a power supply terminal of the second micro controller.

12. The electric vehicle charging controller of claim 11, further comprising a second converter, wherein:
a first terminal of the second converter is connected to one of a controller area network (CAN) transceiver of the electric vehicle or a CAN transceiver of the electric vehicle supply equipment;
a second terminal of the second converter is connected to a second terminal of the second micro controller; and
a third terminal is connected to a second terminal of the first micro controller.

13. A control method of charging an electric vehicle using an electric vehicle charging controller, the control method comprising:
repeatedly turning, by a second control unit, a second switch unit on and off for a predetermined period of time in a state in which a first switch unit is turned off;
receiving, by the second control unit, a charging sequence signal in a state in which the second switch unit is turned on;
generating, by the second control unit, a first control signal on the basis of the charging sequence signal;
switching the first control unit from a sleep mode to a wake-up mode when driving power is supplied to the first control unit on the basis of the first control signal; and
turning, by the first control unit, the first switch unit on and receiving the charging sequence signal.
